(19) Europäisches Patentamt / European Patent Office / Office européen des brevets

(11) **EP 2 005 776 B1**

(12) **EUROPEAN PATENT SPECIFICATION**

(45) Date of publication and mention
of the grant of the patent:
**11.05.2016 Bulletin 2016/19**

(51) Int Cl.:
*H04W 28/04* *(2009.01)*    *H04B 1/10* *(2006.01)*
*H04W 36/06* *(2009.01)*    *H04W 24/10* *(2009.01)*

(21) Application number: **07738776.9**

(22) Date of filing: **12.03.2007**

(86) International application number:
**PCT/JP2007/055329**

(87) International publication number:
**WO 2007/105816 (20.09.2007 Gazette 2007/38)**

(54) **RADIO COMMUNICATION APPARATUS**

FUNKKOMMUNIKATIONSVORRICHTUNG

APPAREIL DE RADIOCOMMUNICATION

(84) Designated Contracting States:
**DE FR GB**

(30) Priority: **16.03.2006 JP 2006073400**
**02.11.2006 JP 2006299655**

(43) Date of publication of application:
**24.12.2008 Bulletin 2008/52**

(73) Proprietor: **Ricoh Company, Ltd.**
**Tokyo 143-8555 (JP)**

(72) Inventor: **SATOH, Tetsuya**
**Sendai-shi**
**Miyagi, 981-0933 (JP)**

(74) Representative: **Leeming, John Gerard**
**J A Kemp**
**14 South Square**
**Gray's Inn**
**London WC1R 5JJ (GB)**

(56) References cited:
**EP-A1- 1 257 090**      **JP-A- 2003 153 337**
**US-A1- 2002 181 417**    **US-A1- 2004 047 324**

• **Carl R. Stevenson ET AL: "IEEE P802.22:**
**Functional Requirements for the 802.22 WRAN**
**Standard", IEEE Mentor, 29 September 2005**
**(2005-09-29), pages 1-49, XP055027519,**
**Retrieved from the Internet:**
**URL:http://www.ieee802.org/22/ [retrieved on**
**2012-05-16]**

**Description**

TECHNICAL FIELD

The present invention relates to a radio communication apparatus, and, in particular, to network communication with the use of a data transmission network such as a LAN (Local Area Network), a PAN (Personal Area Network) or such, inter-apparatus communication between a personal computer and a peripheral such as a multi-function peripheral (MFP), and intra-apparatus communication in a PC, a MFP or such.

BACKGROUND ART

Recently, a USB (Universal Serial Bus) has been widely used as a means for achieving data transmission between a host terminal such as a personal computer (PC) and a peripheral such as a keyboard, a mouse, a printer, a modem or such. USB is a standard of data transmission, and, is originally directed to wired communication. However, recently, for the purpose of user's convenience, application to wireless communication thereof is in progress.

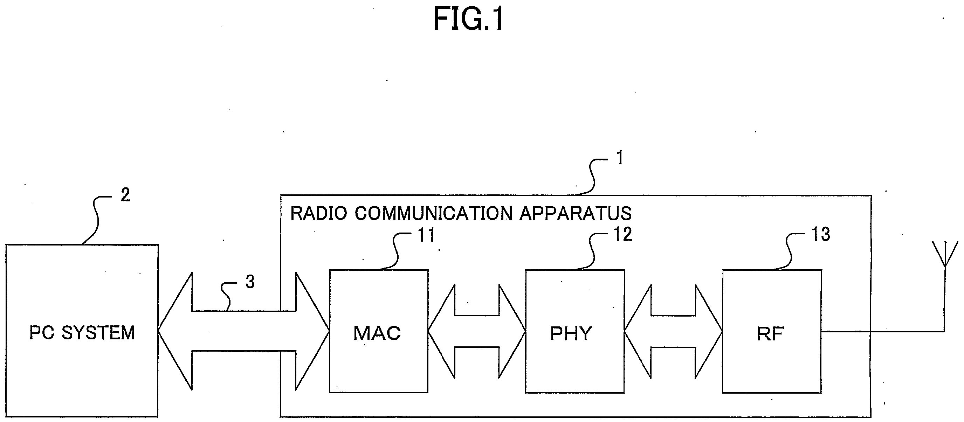

FIG. 1 shows an example of a configuration of a common radio communication apparatus. As shown in FIG. 1, the radio communication apparatus 1 is connected with a PC system 2 by means of a system bus 3 such as a PCI (Peripheral Component Interface), a USB or such. The radio communication apparatus 1 receives data transmitted from an external apparatus via radio communication, and transmits the received data to the PC system 2 by means of the system bus 3. The radio communication apparatus 1 may be incorporated in the PC system 2. In order to thus receive data transmitted from the external apparatus by means of the radio communication and then to transmit the same to the PC system 2, the radio communication apparatus 1 has a MAC (Media Access Control) part 11, a PHY (physical layer) part 12 and a RF (Radio Frequency) part 13. The MAC part 11 acts as a transmission control part for controlling data transmission between the PC system 2 and the external apparatus. The PHY part 12 acts as a physical layer defining network physical connection and transmission method. The RF part 13 acts as a radio input/output part for carrying out data transmission/reception with the external apparatus by air.

It is assumed that the radio communication apparatus 1 of FIG. 1 carries out radio communication with the external apparatus by means of wireless USB. In this case, an interface between the MAC part 11 and the PHY part 12 is compliance with WiMedia MAC-PHY interface specifications. WiMedia is a lower layer standard, and is designed in such a manner that various upper layer protocols (WiNet, Wireless1394, Bluetooth (registered trade name) and so forth) can coexist. A radio communication apparatus which mounts WiMedia has a CCA_STATUS (Clear Channel Assessment Status) signal indicating a state of a radio wave of the radio communication, in the MAC-PHY interface. The CCA_STATUS signal is activated by the PHY part 12 when a signal level of a radio medium signal received by the RF part 13 exceeds a predetermined level.

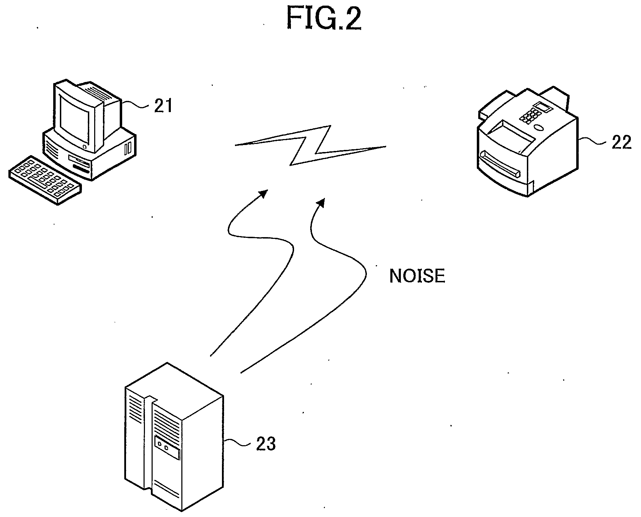

Further, according to the WiMedia standard, a means for avoiding communication collision between apparatuses which mount this standard is provided. However, no means is provided for avoiding collision with a radio communication apparatus which is not compatible with this standard, or another apparatus which generates a noise in a common frequency band. A problem thus occurring will now be described with reference to FIG. 2. FIG. 2 shows one example of a wireless system including a PC and a peripheral. In FIG. 2, the PC 21 carries out data transmission with a multi-function peripheral (MFP) 22 by means of radio communication according to the WiMedia standard. In this case, when, in neighborhood of the PC 21 and the MFP 22, there is another apparatus which generates a noise of a frequency band the same as the radio communication frequency between the PC 21 and the MFP 22, the radio communication between the PC 21 and the MFP 22 may be affected. As a result, stable communication quality may not be ensured.

For example, Japanese Laid-Open Patent Application No. 11-150756 discloses communication facilities in which collision can be avoided even when the same sub-frequency bands are simultaneously captured between different radio stations. The radio facilities include a plurality of radio systems including at least one radio station. The radio system transmits a pulse previously controlled in the sub-frequency band before transmitting an effective signal. As a result, it is possible to determine whether or not it has occupied the sub-frequency band different from that of the other radio system.

Japanese Laid-Open Patent Application 2003-46515 discloses a radio communication apparatus by which radio communication between a radio parent apparatus and a radio child apparatus can be positively carried out as a result of a radio channel having a noise mixed which affects the radio communication being previously- detected. This radio communication apparatus carries out carrier sensing in sequence on frequencies which may affect the radio communication other than a carrier frequency of a radio channel to actually apply. Then, when a test frequency exceeding a predetermined value in a carrier sensing level is detected, a channel corresponding to the test frequency is determined as a noise-mixed channel in which the noise is mixed.

US 2004/0047324 A1 discloses a system for managing communication with a plurality of wireless client devices wherein spectrum profile information describing the radio frequency environment (activity in the frequency band) at a wireless client device is sent to the wireless base station device (where the parameter controls are made) from either a wireless client device or another radio device in the proximity of one or more wireless client devices that is capable of generating the spectrum profile information.

EP 1 257 090 A1 describes an algorithm for the assignment of channels used by access points (APs) in wireless LANs in a dynamic way in order to achieve the best performance. The assignment of channels is based on a procedure in which an AP passively listens on the other channels during idle time. The AP calculates the optimal channel with the least interference and sharing.

DISCLOSURE OF THE INVENTION

However, the above-mentioned communication facilities of Japanese Laid-Open Patent Application 11- 150756 transmit a pulse-like radio wave for determining whether or not the same sub-frequency band is simultaneously captured between different radio stations. Thereby, a noise may be generated therefrom. Further, in the above-mentioned radio communication apparatus of Japanese Laid-Open Patent Application 2003-46515, whether or not a channel can be actually used can be determined only from whether or not a carrier is included therein.

In consideration of these problems, an object of the present invention is to provide a radio communication apparatus by which an influence of a noise can be avoided as a result of the noise of a frequency-band upon communication being quantitatively evaluated. In order to achieve the object, according to the present invention, a radio communication apparatus is provided, as defined in the appended claims.

Thereby, such a radio communication apparatus can be provided in which it is possible to quantitatively evaluate a noise in a frequency band upon communication, and to avoid an influence of the noise.

BRIEF DESCRIPTION OF THE DRAWINGS

Other objects and further features of the present invention will become more apparent from the following detailed description when read in conjunction with the accompanying drawings:

FIG. 1 shows an example of a configuration of a common radio communication apparatus;
FIG. 2 shows an example of a wireless radio system including a PC and a peripheral;
FIG. 3 roughly shows an example of a MAC part included in a radio communication apparatus according to a best mode for carrying out the present invention;
FIG. 4 shows a first example of a configuration of the MAC part in the best mode for carrying out the present invention;
FIG. 5 shows a second example of the configuration of the MAC part in the best mode for carrying out the present invention;
FIG. 6 shows a third example of the configuration of the MAC part in the best mode for carrying out the present invention;
FIG. 7 shows a fourth example of the configuration of the MAC part in the best mode for carrying out the present invention; and
FIG. 8 shows a diagram for illustrating a state determination for a CCA_STATUS signal.

BEST MODE FOR CARRYING OUT THE PRESENT INVENTION

As mentioned above, according to the present invention, a radio communication apparatus includes noise detecting means for detecting a noise of a frequency band upon communication; determining means for determining whether or not the thus-detected noise exceeds a predetermined level; and communication changing means for changing the frequency band and/or a communication radio field intensity based on a determination result of said determining means.

Thereby, such a radio communication apparatus can be provided in which it is possible to quantitatively evaluate a noise in a frequency band upon communication, and to avoid an influence of the noise. According to a best mode for carrying out the present invention, by detecting a CCA_STATUS signal and a PHY_ACTIVE (Physical Layer Active Indication) signal provided in the WiMedia MAC-PHY interface specifications together, it is detected whether or not a frequency band upon communication is affected by a noise from another apparatus or such, and, when the frequency band upon communication is affected by the noise from the other apparatus or such, switching is made to another available frequency band which is not affected, or, a communication field intensity is sufficiently increased so that an influence of the noise may not appear. As a result, it is possible to ensure proper communication quality in the radio communication apparatus.

Preferably, the radio communication apparatus may further have a measuring time timer for setting a time for the noise detecting means to detect the noise.

Thereby, it is possible to determine a factor actually affecting communication of the radio communication apparatus. As a result; it is possible to take suitable measures (for example, to switch a frequency band, or to increase a communication field intensity or such).

Or, preferably, the radio communication apparatus may further has intensity determining means for detecting the level of the noise.

Thereby, when the frequency band upon communication is affected by a noise from another apparatus or such, it is possible to appropriately adjust a signal level of the frequency band upon communication so as to avoid the influence of the noise.

Or, preferably, the radio communication apparatus may further have intensity threshold setting means for setting a threshold for the noise detecting means to detect the noise.

Thereby, when the frequency band upon communication is affected by a noise from another apparatus or such, it is possible to appropriately adjust a signal level of the frequency band upon communication so as to avoid the influence of the noise. In particular, in comparison to the above-mentioned radio communication apparatus having the intensity determining means, it is possible to obtain approximately the same advantage with a simpler configuration.

Or, preferably, the threshold may have hysteresis characteristics.

Thereby, even when the signal level fluctuates around the threshold, it is possible to obtain a stable noise evaluation result.

Thus, according to the best mode for carrying out the present invention, it is possible to quantitatively evaluate a noise in a frequency band upon communication, so as to avoid an influence of a noise.

Next, the best mode for carrying out the present invention will be described in detail with reference to figures.

As described above, the radio communication apparatus in the related art mounting WiMedia has the CCA_STATUS signal indicating a signal state of radio communication. Actually, a method for using this signal is not particularly prescribed, and should be determined by an apparatus designer. Therefore, according to the best mode for carrying out the present invention, the signal is utilized to carry out noise evaluation of a frequency band upon communication.

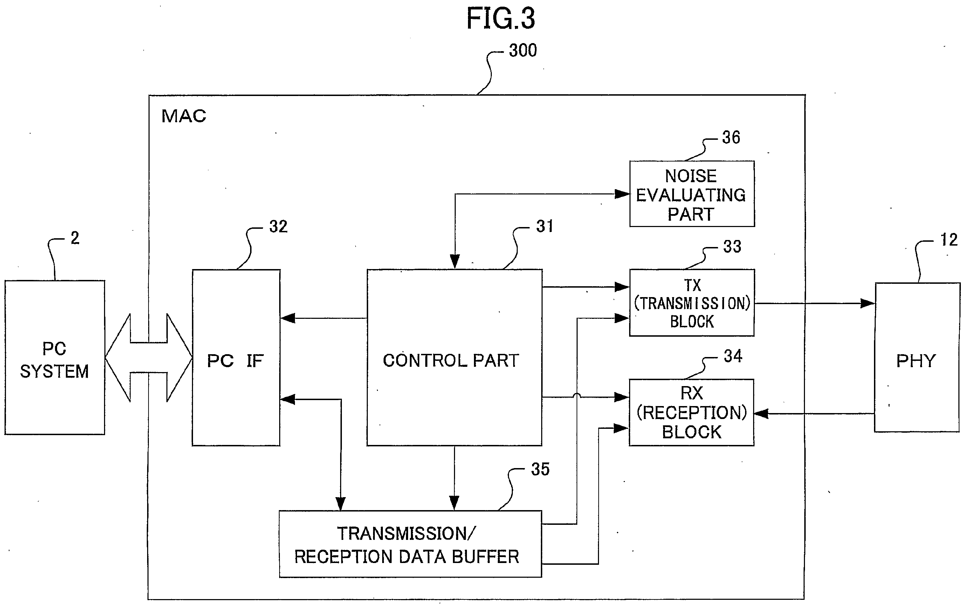

FIG. 3 shows a configuration of a MAC part included in a radio communication apparatus according to the best mode for carrying out the present invention.

The other parts of the radio communication apparatus according to the best mode for carrying out the present invention may be the same as those of the radio communication apparatus 1 mounting WiMedia described above as the related art with reference to FIG. 1, and descriptions thereof are omitted.

As shown in FIG. 3, the MAC part 300 includes a control part 31, a PC interface (IF) 32, a TX (transmission) block 33, a RX (reception) block 34, a transmission/reception data buffer 35 and a noise evaluating part 36. The control part 31 controls the respective parts of the MAC part 300, and includes a CPU (Central Processing Unit) and a ROM (Read Only Memory). The PC interface 32 acts as an input/output part for carrying out data transmission/reception with the PC system 2. The TX block 33 acts as a transmitting part for transmitting data to the PHY part 12. The RX block 34 acts as a receiving part for receiving data from the PHY part 12. The transmission/reception data buffer 35 acts as a storing part for temporarily storing data which is received from the PC system 2 via the PC interface 32 to be transmitted to the PHY part 12 by means of the TX block 33, as well as data which is received from the PHY part 12 by means of the RX block 34 to be transmitted to the PC system 2 by means of the PC interface 32. The noise evaluating part 36 is a part for evaluating a noise in a frequency band currently used in radio communication with an external apparatus.

Next, several embodiments (examples) of the best mode for carrying out the present invention for evaluation of a radio channel in the MAC part will be described.

[Embodiment 1]

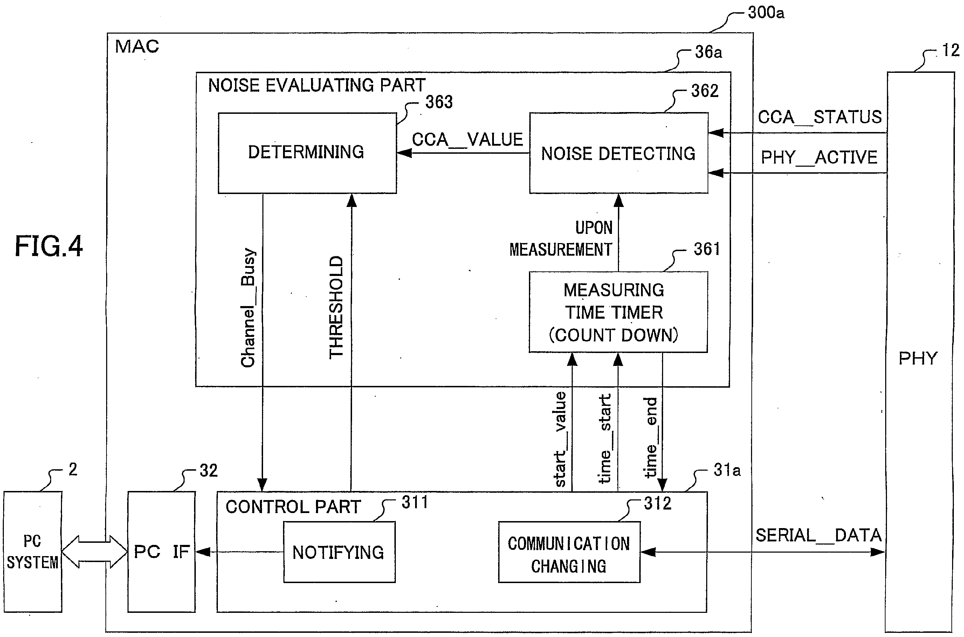

FIG. 4 shows a first example of a configuration of the MAC part according to the best mode for carrying out the present invention. It is noted that, in FIG. 4, only part of the MAC part is shown, and, thus, only components for describing operations concerning the best mode for carrying out the present invention are shown.

In the MAC part 300a of FIG. 4, the noise evaluating part 36a has a measuring time timer 361, a noise detecting part 362 and a determining part 363.

The measuring time timer 361 acts as a clock of a counting down type, for measuring a predetermined measuring time. The noise detecting part 362 acts as a part for detecting a noise of a frequency band upon communication, recording a time (actually, counting the number of given predetermined clock pulses) during which the CCA_STATUS signal indicating a signal state of radio communication output from the PHY part is active and also the PHY_ACTIVE signal is active during the measuring time, and outputting the recording result as a CCA_VALUE signal indicating a CCA_VALUE value. That is, the CCA_STATUS signal is a signal indicating that a signal level (i.e., the level of the radio medium signal) of the frequency band upon communication received by the RF part 13 of the radio communication apparatus 1 is equal to or more than the predetermined level, as mentioned above, and, assuming that the predetermined level corresponds to a level at which a signal used in the radio communication is affected, it can be determined that, when the CCA_STATUS signal is active, some radio wave is generated in such a level that it affects the radio communication in the frequency band used for the radio communication.

The above-mentioned level at which the radio communication is affected corresponds to a level at which some trouble occurs in the radio communication, and depends on transmission/reception power and a data rate of the radio communication. That is, in a case where the radio communication is carried out with low transmission/reception power, the influence appears even from a noise of low power, while, in a case where the radio communication is carried out with high transmission/reception power, the influence may not much arise from a noise of such a low power. Further, proper communication may be ensured thanks to an error correction function having high redundancy while the radio communication is carried out with a low data rate, while, in a case where the radio communication is carried out with a high data rate, proper communication may not be ensured since only error correction with low redundancy is available in the situation. Therefore, a threshold for activating the CCA_STATUS signal is determined with the use of a lookup table with respect to the transmission/reception power and the data rate currently used for the radio communication.

It is noted that, only from the CCA_STATUS signal, it is not possible to determine whether or not a radio wave appearing is one generated for the purpose of the radio communication of the WiMedia radio communication apparatus of the own station or another station, or, the radio wave appearing is one acting as a noise factor generated from a radio wave source other than these WiMedia radio communication apparatuses, against the WiMedia radio communication apparatuses. In order to determine whether the radio wave appearing corresponds to one from the WiMedia radio communication apparatuses or others, the above-mentioned PHY_ACTIVE signal provided according to the WiMedia standard is used. The PHY_ACTIVE signal is a signal provided from WiMedia-PHY (i.e., the PHY part 12 of FIG. 1) to WiMedia-MAC (i.e., the MAC part 300a of FIG. 4, corresponding to the MAC part 11 of FIG. 1), and, is activated when the WiMedia-PHY transmits or receives a radio wave of the WiMedia standard. That is, when a radio wave which the WiMedia-PHY receives is not one of the WiMedia standard, the PHY_ACTIVE signal is not activated or is deactivated. Therefrom, it is possible to determine that the received radio wave may act as a noise factor against the WiMedia radio wave when the received radio wave is received with the PHY_ACTIVE signal being deactivated and the CCA_STATUS signal being activated. Accordingly, it can be determined that a noise is detected in the frequency band upon communication, when the following requirements are met, i.e.,

$$\text{CCA\_STATUS = active, and also, PHY\_ACTIVE = deactive}$$

There, 'deactive' means a state of being deactivated, and, the same manner is applied also hereinafter.

Further, the above-mentioned CCA_VALUE signal output from the nose detection part 362 as the measurement result of the CCA_STATUS signal and the PHY_ACTIVE signal is a value indicating a rate at which a signal having a level equal to or more than the predetermined level appears during the measuring time, and, is used as a measure to determine whether or not the radio frequency band upon communication is affected by a noise. The determining part 363 acts as a part for determining whether or not the frequency band upon communication is affected by a noise from another apparatus or such based on the CCA_VALUE signal output from the noise detecting part 362.

Further, in the MAC part 300a of FIG. 4, the control part 31a has a notifying part 311 and a communication changing part 312.

The notifying part 311 acts as a part for notifying of a determination result of the determining means 363 of the noise evaluating means 36a, to the PC system 2. The communication changing part 312 acts as a part for outputting a switching instruction to the PHY part 12 by means of communication with a SERIAL_DATA signal for the PHY part 12 to change the frequency band upon communication and/or a communication radio field intensity, according to the determination result of the determining part 363 of the noise evaluating part 36a.

Next, an operation procedure of the MAC part 300a of FIG. 4, described above, is described.

First, the control part 31a sets a value 'start_value', as a measuring time for the CCA_STATUS signal in the measuring time timer 361. The measuring time may be set to adapt to an expected interference factor when a particular interference factor is expected which may affect the frequency band used for communication. For example, as the expectable particular interference factor for when communication is carried out in a server room or such, since it is expected that the server room is operated regularly, the measuring time is set such that, measurement of 10 seconds is carried out 30 times with an interval of 1 minute each therebetween. In another example, for when a microwave oven may affect communication, since the microwave oven is used continuously for several minutes ordinarily, the measuring time is set such that measurement of one minute is carried out three times with an interval of 5 minutes each therebetween. In further another example, for when radio communication carried out by a PC may affect communication, since it is expected that a radio wave is generated sporadically within a short duration each time with an interval of tens of milliseconds each therebetween, the measuring time is set such that continuous measurement of ten minutes is carried out once. For when none of particular interference factors is expected, past noise evaluation results are previously stored in a storage device (not shown) of the control part 31, and, an attempt is made to set such a measuring time with priority, which corresponds to a value in which noise detection occurred most frequently. As a result, it is possible to evaluate a noise pattern within the smallest number of procedures. It is also possible to measure a noise only when the own station carries out or does not carry out communication. When, from the measurement result, it is determined that, a noise was detected only when the own station carried out communication, and also, no noise was detected when the own station did not carry out communication, a radio wave from the own station may have acted as the noise due to reflection. Accordingly, in such a case, it is possible to avoid the noise problem by lowering the transmission power level of the own station. The above-mentioned setting of the measuring time will be described in more detail.

[Setting for when a server room or such may affect communication]

In an environment in which a noise source operates constantly such as in a server room, it is expected that the same noise occurs with approximately in a fixed frequency band. As a method to presume it, noise measurement is made during a continuous time, for example, 1 or 2 hours. In this case, when a noise is detected at a high detection rate such as that equal to or more than 95 % as a result of the measurement during the above-mentioned measuring time, it can be determined that a noise source exists which generates a noise constantly in the measured location. For the purpose of carrying out the measurement for such a continuous long time, appropriate hardware is required, and thus, hardware cost may increase. In order to solve this problem, a method may be used in which, instead of carrying out the measurement during a continuous long time, the noise measurement is made discretely. For example, continuous measurement of ten seconds is made 60 times with an interval of 1 minute each therebetween. Thereby, even though the actual measurement time is total 600 seconds (= 10 [seconds] × 60 [times]), it is possible to evaluate an average noise during one hour (= 10 [seconds] + 1 [minutes]) × 60 [times]). Accordingly, it is possible to reduce the hardware required for the noise measurement.

[Setting for when a microwave oven is expected]

It is known that a frequency band of a microwave oven is 2.4 GHz band and affects a frequency band used by wireless LAN. In an environment in which an apparatus which emits a radio wave such as a microwave oven, an electromagnetic cooking machine or such operates, intermittent uses thereof each during minutes through tens of minutes are expected from its common operation manner. In order to presume an actual operation environment, the following noise measurement method may be used. That is, immediately after a start of radio communication of the radio communication apparatus, or when it is detected that communication quality degrades after the radio communication is carried out for a while, noise measurement of a continues long time is carried out (for example, for 10 minutes or 30 minutes). Then, when such a measurement result thereof is obtained therefrom that, a constant noise condition has continued (for example, due to operation of a microwave oven) for a fixed time from immediately after the measurement, and, then, after an elapse of the fixed time, the noise condition has improved (as a result of the use of the microwave oven being finished), it can be presumed that such an apparatus as a microwave oven, which generates a radio wave only during minutes, operated. In order to reduce required resources for the noise measurement in this case, the same as the above-mentioned case, the noise measurement may be made discretely, i.e., the measurement of ten seconds is repeated with an interval of 1 minute each therebetween, or so. In noise evaluation for 30 minutes in which continuous measurement of ten seconds is repeated with an interval of 1 minute each therebetween as mentioned above, merely measurement resources for 300 minutes are required.

[Setting for when a radio communication wave of another radio apparatus is expected]

When another radio communication apparatus not compliance with the WiMedia standard carries out communication, the radio communication wave may affect communication as a noise. In order to presume the operation environment in this case, the following noise measuring method may be used. That is, noise measurement of a relatively short time (for example, ten seconds, 30 seconds or such) is repeated with an interval (for example, 1 minute) each therebetween. Then, in a case where, from the measurement of the short time each, a noise rate is not zero but not so large (for example, more than 0 % and less than 95 %, or such), it can be presumed that another radio communication apparatus operates. That is, in recent radio communication, i.e., typically, IEEE802.11 as a typical one, beacon frames generating communication basic information with fixed intervals are transmitted, where the frame transmission is carried out several time per second, and transmission/reception frame spans are prescribed in the specifications. There, intervals in which no radio wave transmission is allowed exist, and thus, the noise detection rate should not amount to 100 % during the measuring time.

A noise pattern detected from the measurement is stored in the storage device in the control part 31a. Then, when noise detection is carried out subsequently, the past noise patterns thus stored in the storage device are read. At this time, the noise patterns should be read in such an order that those which have been detected more are read earlier. As a result, the noise patterns are read in such an order that noise patterns of environments a particular user more frequently use are read earlier. As a result, it is possible to effectively reduce the number of procedures required for the noise detection.

Returning to FIG. 4, the control part 31a sets a threshold for the CCA_VALUE value acting as a measure to determine whether or not the frequency band upon communication is affected by a noise, in the determining part 363. For example, the threshold of 40 % or 60 % of the above-mentioned value 'start_value' is set. That is, in this case, when the time in which the CCA_STATUS signal is active and also the PHY_ACTIVE signal is deactive exceeds 40 % or 60 % of the measuring time (i.e., the value 'start_value') of the measuring time timer 361, which value corresponds to the CCA_VALUE value, the determining part 363 activates a Channel_Busy signal as will be described later.

After setting each value, the noise evaluating part 36a starts measurement of the CCA_STATUS signal and the PHY_ACTIVE signal output from the PHY part 122. At this time, in order that the measuring time timer 361 starts time measurement (i.e., counting down), the control part 31a activates a timer_start signal input to the measuring time timer 361. After the timer_start signal is activated, the measuring time timer 361 starts the time measurement. The measuring time timer 361 activates a signal indicating 'upon measurement' during the time measurement. This signal is input to the noise detecting part 362. During a time in which the signal indicating "upon measurement" is thus activated, the noise detecting part 362 counts given predetermined clock pulses during a time in which the CCA_STATUS signal output by the PHY part 12 is active and also the PHY_ACTIVE signal is deactive. That is, a time period in which the detected signal level of the frequency band upon communication of the radio medium signal received by the RF part 13 of the radio communication apparatus 1 is equal to or more than the predetermined level due to an influence of a noise from another apparatus or such is recorded.

When the count value of the measuring time timer 361 becomes zero, this meaning that the measuring time set before the measurement in the measuring time timer 361 has elapsed, the measuring time timer 361 deactivates the signal indicating "upon measurement". The noise detecting part 362 responds thereto, to output the record result of the number of the thus-counted clock pulses during the time in which the CCA_STATUS signal is active and also the PHY_ACTIVE signal is deactive, to the determining part 363 as the CCA_VALUE value. The determining part 363 determines whether or not the CCA_VALUE value output from the noise detecting part 362 exceeds the threshold set before the measurement by the control part 31a. When the CCA_VALUE value exceeds the threshold, the determining part 363 determines that the frequency band upon communication is affected by a noise of another apparatus or such, and activates the above-mentioned Channel_Busy signal indicating an occupied situation of the frequency band.

Further, after the elapse of the measuring time, the measuring time timer 361 activates a timer_end signal for notifying the control part 31a of the end of the measurement. After the timer_end signal is thus activated, the control part 31a checks the state of the Channel_Busy signal. When the Channel_Busy signal is activated by the determining part 363, the control part 31a uses the notifying part 311 to notify the PC system 2 that the frequency band upon communication is affected by a noise of another apparatus or such.

The PC system 2 thus receiving the notification from the notifying part 311 of the control part 31a carries out any one(s) of the following operations, depending circumstances of a corresponding application program:

(1-1) When it is determined, from such determination notification from the MAC part 300a, that a noise appears constantly as in a server room or such, but it is expected that no noise appears in another available frequency band, the currently used frequency band is switched to the other one in which it is thus expected that no noise appears. Then, the above-mentioned noise measurement is executed again.

(1-2) When it is determined that a noise appears constantly as in a server room or such, also it is expected that a noise appears the same in any other available frequency bands, and thus, communication seems difficult to carry out, the radio communication is stopped.

(1-3) When it is determined that a noise appears constantly as in a server room or such, also it is expected that a noise appears the same in any other available frequency bands, and thus, communication is difficult to carry out, an attempt is made to increase transmission radio field intensity of the own station so as to overcome the influence of the noise.

(1-4) When a noise appears during a certain long time zone as a noise from an apparatus such as a microwave oven, but, from the past experience, it can be expected that the noise situation may improve after an elapse of a time of minutes, tens of minutes or such, the above-mentioned noise evaluation is carried out again after an elapse of such a fixed time. Thus, waiting is carried out until the frequency band to use becomes unoccupied.

(1-5) When the detected noise does not correspond to WiMedia and it is determined that this corresponds to a PC radio communication wave, and also, the PC of the own station mounts a radio communication apparatus itself generating the PC radio communication wave, an instruction is transmitted for an appropriate correction of transmission power to the radio communication apparatus of the PC of the own station.

Further, the control part 31a not only notifies the PC system 2 that the frequency band upon communication is affected by a noise from another apparatus or such, but also it may use the communication changing part 312 to provide an instruction to the PHY part 12 to cause it to switch the frequency band upon communication into another frequency band. In this case, the radio communication apparatus 1, in which the MAC part 300a is included as the MAC part 11 in the embodiment 1 (first example), carries out the following operation by the functions of the PHY part 12 and the RF part 13 thereof:

(1-6) With the use of the frequency band currently used for the radio communication, it is notified to a radio communication apparatus on the other side of the radio communication that the frequency band is to be switched. Then, after agreement is made between the radio communication apparatus 1 and the other radio communication apparatus for the switching the frequency band, the frequency band upon the radio communication is switched to another frequency band.

It is noted that, although the description has been made as if the communication changing part 312 of the control part 31a and the noise detecting part 362 of the noise evaluating part 36a make transmission/reception of the signals with the PHY part 12 directly, the TX block 33 and the RX block 34 are used actually there.

[Embodiment 2]

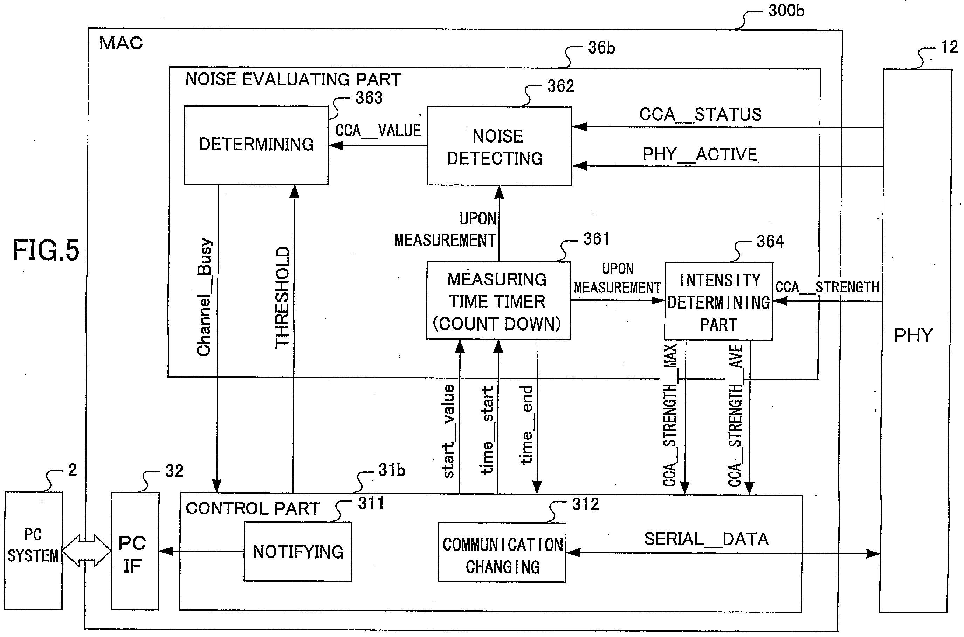

FIG. 5 shows a second example (embodiment 2) of the configuration of the MAC part in the best mode for carrying out the present invention. It is noted that FIG. 5 shows only part of the MAC part for describing operations of the embodiment 2 according to the best mode for carrying out the present invention.

The MAC part 300b of FIG. 5 is different from the MAC part 300a of FIG. 4 in that the noise evaluating part 36b further has an intensity determining part 364 for determining the signal level (i.e., signal intensity) upon communication of the radio medium signal received by the RF part 13 of the radio communication apparatus 1. All' the other components have the same functions as those of the MAC part 300a of FIG. 4 and carry out the same operations.

The intensity determining part 364 has the above-mentioned signal indicating "upon measurement" from the measuring time timer 361 input thereto. During a time in which the signal indicating "upon measurement" is active, the intensity determining part 364 receives a CCA_STRENGTH signal indicating the signal level in the frequency band upon communication of the radio medium signal received by the RF part 13 of the radio communication apparatus 1, and records the same. After that, when the signal indicating "upon measurement" from the measuring time timer 361 is deactivated, the intensity determining part 364 calculates, from the thus-recorded values of the CCA_STRENGTH signal, a maximum value CCA_STRENGTH_MAX and an average CCA_STRENGTH_AVE thereof, and outputs the same to the control part 31b. It is noted that, actually, the intensity determining part 364 may record the CCA_STRENGTH signal in predetermined clock timing as a sequence of instantaneous values corresponding to the respective ones of the clock timing during the time of "upon measurement", sum the thus-recorded values and, therefrom, calculate the maximum value CCA_STRENGTH_MAX and the average CCA_STRENGTH_VE.

The control part 31b can thus grasp the signal levels in the frequency band upon communication of the radio medium signal received by the RF part 13 of the radio communication apparatus 1, from the values CCA_STRENGTH_MAX and CCA_STRENGTH_AVE thus output from the intensity determining part 364. When the above-mentioned Channel_Busy signal is activated by the determining part 363, the control part 31b can use the notifying part 311, to notifies the PC system 2 of the information of the signal levels of the radio medium signal received by the RF part 13 of the radio communication apparatus 1 as well as that the frequency band upon communication is affected by a noise from another apparatus or such.

The PC system 2 thus receiving the notification from the control part 31b, carries out any one(s) of the following operations, depending circumstances of a corresponding application program:

(2-1) When it is determined that a noise appears constantly as in a server room or such, but it is expected that no noise appears in another available frequency band, the currently used frequency band is switched to the other one in which it is thus expected that no noise appears. Then, the above-mentioned noise measurement is executed again.

(2-2) When it is determined that a noise appears constantly as in a server room or such, it is expected that also a noise appears the same in any other available frequency bands, and thus, communication seems difficult, the radio communication is stopped.

(2-3) When it is determined that a noise appears constantly as in a server room or such, but the intensity of the appearing noise is sufficiently smaller than the radio wave intensity with which the own station can transmit a signal, the transmission radio wave intensity of the own station is increased.

(2-4) When a noise appears in a certain long time zone as a noise from an apparatus such as a microwave oven, but, from the past experience, it can be expected that the noise situation may improve after an elapse of a time of minutes, tens of minutes or such, the above-mentioned noise evaluation is carried out again after an elapse of such a fixed time. Thus, waiting is carried out until the frequency band to use becomes unoccupied.

(2-5) When the detected noise does not correspond to WiMedia and it is determined that this corresponds to a PC radio communication wave, and also, the PC of the own station mounts a radio communication apparatus itself generating the PC radio communication wave, an instruction is transmitted for an appropriate correction of transmission power to the radio communication apparatus of the PC of the own station.

(2-6) When no noise is detected, the transmission radio wave intensity of the own station is decreased.

The PC system 2 can carry out the operation of the above-mentioned item (2-1) or (2-2) with the use of the MAC part 300a of FIG. 4 of the embodiment 1, when a noise appears constantly as a noise of a server room or such. However, it is not possible in the embodiment 1 to determine an intensity level of the noise and appropriately increase the transmission radio wave intensity of the own station as in the above-mentioned item (2-3). That is, the MAC part 300a of FIG. 4 of the embodiment 1 has a function of merely detecting that a noise appears. Accordingly, in the embodiment 1, even when the transmission radio wave intensity is changed according to the determination result of the determining part 363, it may not be possible to actually avoid the influence of the noise. In contrast thereto, the MAC part 300b in the embodiment 2 can use the intensity determining part 364 to also obtain the information of the specific intensity level of the appearing noise. Thereby, it is possible to appropriately change the transmission radio wave intensity of the own station.

Further, when a noise from an apparatus such as a microwave oven or a noise from another radio communication apparatus not compliance with WiMedia appears, the PC system 2 can carry out the operations of the above-mentioned items (2-4) and (2-5) with the use of the MAC part 300a of FIG. 4 in the embodiment 1. In contrast thereto, in the embodiment 2 of FIG. 5, with the use of the MAC part 300b, where the noise evaluating part 36b further has the intensity determine part 364, it is possible to decrease the transmission radio wave intensity of the own station when no noise is detected, as in the above-mentioned item (2-6). Thereby, it is possible to save power consumption of the radio communication apparatus 1 and also, to reduce a possibility to affect another apparatus by the radio communication of the own station.

Further, when the Channel_Busy signal is activated by the determining part 373, the control part 31b may use the communication changing part 312 to provide an instruction to the PHY part 12 to cause it to switch the frequency band upon communication into another frequency band. In this case, the radio communication apparatus 1 carries out the following operation:

(2-7) With the use of the frequency band currently used for radio communication, it is notified to a radio communication apparatus on the other side of the radio communication that the frequency band is to be switched. Then, after agreement is made between the radio communication apparatus 1 and the other radio communication apparatus for the switching the frequency band, the frequency band upon communication is then switched to another frequency band.

[Embodiment 3]

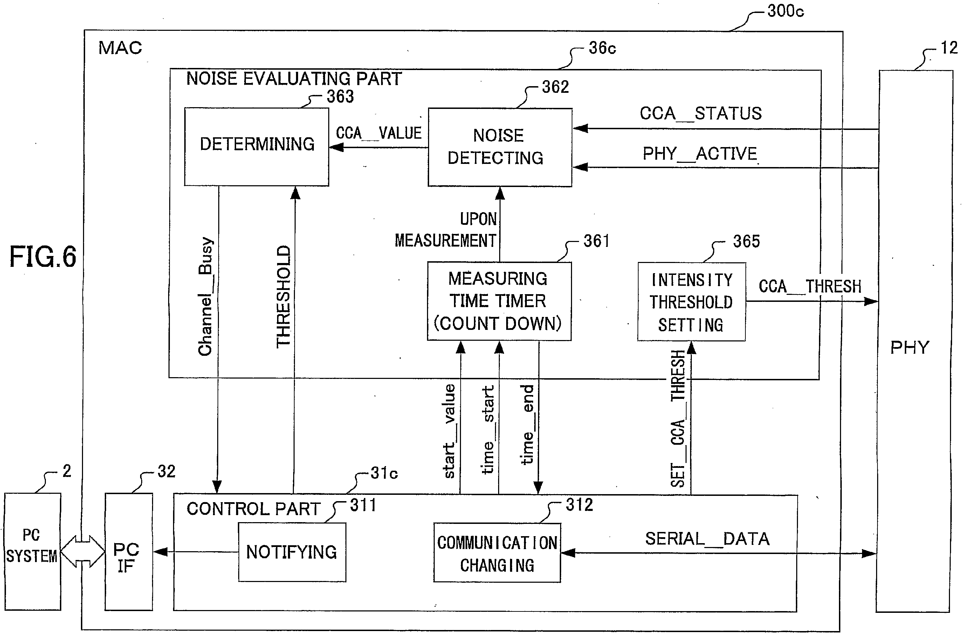

FIG. 6 shows a third example (embodiment 3) of the configuration of the MAC part according to the best mode for carrying out the present invention. It is noted that FIG. 6 shows only part of the MAC part and thus, only components for describing operations according the embodiment 3 of the best mode for carrying out the present invention.

The MAC part 300c of FIG. 6 is different from the MAC part 300a in the first example described above in that the noise evaluating part 36c further has an intensity threshold setting part 365 for setting the above-mentioned threshold for activating the CCA_STATUS signal.

The intensity threshold setting part 365 receives, before a start of the noise measurement by means of the noise detecting part 362, a SET_CCA_THRESH signal indicating the above-mentioned threshold activating the CCA_STATUS signal for the PHY part 12 to activate the CCA_STATUS signal, from the control part 31c, and outputs the value thereof to the PHY part 12 as a CCA_THRESH signal. The PHY part 12 activates the CCA_STATUS signal only when the signal level of the radio medium signal of the frequency band upon communication received by the RF part 13 exceeds the value set by the CCA_THRESH signal, and then, outputs the same to the noise evaluating part 36a of the MAC part 300c.

In this case, the control part 31c can recognize a magnitude of a change in the signal level of the radio medium signal received by the RF part 13 of the radio communication apparatus 1 occurring due to an influence of a noise from another apparatus or such in the frequency band upon communication. That is, the control part 31c can determine whether or not the signal level of the radio frequency band upon communication of the radio medium signal received by the RF part 13 of the radio communication apparatus 1 is larger than the threshold for activating the CCA_STATUS signal set in the PHY part 12 by means of the intensity threshold setting part 365, and, when the Channel_Busy signal is activated by the determining part 363, the control part 31c can notify the PC system 2, with the use of the notifying part 311, that the frequency band upon communication is affected by a noise of another apparatus or such, as well as information concerning the signal level of the radio medium signal received by the RF part 13 of the radio communication apparatus 1, when having determining that the signal level of the radio frequency band of the radio medium signal received by the RF part 13 of the radio communication apparatus 1 exceeds the threshold for activating the CCA_STATUS signal.

The PC system 2 thus receiving the notification from the control part 31c, carries out any one(s) of the following operations, depending circumstances of a corresponding application program:

(3-1) When it is determined that a noise appears constantly as in a server room or such, but it is expected that no noise appears in another available frequency band, the currently used frequency band is switched to the other one in which it is thus expected that no noise appears. Then, the above-mentioned noise measurement is executed again.

(3-2) When it is determined that a noise appears constantly as in a server room or such, also it is expected that a noise appears the same in any other available frequency bands, and thus, communication seems difficult, the radio communication is stopped.

(3-3) When it is determined that a noise appears constantly as in a server room or such, but the intensity of the appearing noise is sufficiently smaller than a radio wave intensity with which the own station can transmits a signal, the transmission radio wave intensity of the own station is increased.

(3-4) When a noise appears during a certain long time zone as a noise from an apparatus such as a microwave oven, but, from the past experience, it can be expected that the noise situation may improve after an elapse of a time of minutes, tens of minutes or such, the above-mentioned noise evaluation is carried out again after an elapse of such a fixed time. Thus, waiting is carried out until the frequency band to use becomes unoccupied.

(3-5) When the detected noise does not correspond to WiMedia and it is determined that this corresponds to a PC radio communication wave, and also, the PC of the own station mounts a radio communication apparatus itself generating the PC radio communication wave, an instruction is transmitted for an appropriate correction of transmission power to the radio communication apparatus of the PC of the own station.

(3-6) When no noise is detected, the transmission radio wave intensity of the own station is decreased.

The PC system 2 can carry out the operation of the above-mentioned item (3-1) or (3-2) with the use of the MAC part 300a of FIG. 4 in the embodiment 1, when a noise appears constantly as a noise of a server room or such. However, in the embodiment 1, it is not possible to determine an actual intensity level of the noise and to appropriately increase the transmission radio wave intensity of the own station as in the above-mentioned item (3-3). Further, the MAC part 300a of FIG. 4 in the embodiment 1 has a function of merely detecting that a noise appears. Accordingly, in the embodiment 1, even when the transmission radio wave intensity is changed according to the determination result of the determining part 363, it may not be possible to actually avoid the influence of the noise. In contrast thereto, the MAC part 300c in the embodiment 3 can use the intensity threshold setting part 365 to even recognize whether or not the intensity level of the noise appearing is larger than the threshold. Thereby, it is possible to appropriately change the transmission radio wave intensity of the own station.

Further, when a noise from an apparatus such as a microwave oven or a noise from another radio communication apparatus not compliance with WiMedia appears, the PC system 2 can carry out the operations of the above-mentioned items (3-4) and (3-5) with the use of the MAC part 300a of FIG. 4 in the embodiment 1. However, in the embodiment 3 of FIG. 6, with the use of the MAC part 300c, where the noise evaluating part 36b further incorporates therein the intensity threshold setting part 365, it is thus possible to decrease the transmission radio wave intensity of the own station to such a degree that the own station still may not be affected by the noise in the above-mentioned item (3-6), when no noise is detected, that is, when the noise is less than the threshed. Thereby, it is possible to save power consumption of the radio communication apparatus and also, to reduce a possibility to affect another apparatus'by the radio communication of the own station.

Further, when the Channel_Busy signal is activated by the determining part 373, the control part 31b may use the communication changing part 312 to provide an instruction to the PHY part 12 to cause it to switch the frequency band upon communication into another frequency'band. In this case, the radio communication apparatus 1 carries out the following operation:

(3-7) With the use of the frequency band currently used for the radio communication, it is notified to a radio communication apparatus on the other side of the radio communication that the frequency band is to be switched. Then, after agreement is made between the radio communication apparatus 1 and the other radio communication apparatus for the switching the frequency band, the frequency band upon communication is switched to another frequency band.

The MAC part 300c in the embodiment 3 thus provides the same advantages as those of the MAC part 300b of FIG. 5 using the intensity determining part 364 in the embodiment 2, even with the simpler configuration.

[Embodiment 4]

In the MAC 300c of FIG. 6 described above as the third example (embodiment 3), the control part 31c sets the single threshold for activating the CCA_STATUS signal in the PHY part 12 by means of the intensity threshold setting part 365. However, the intensity threshold setting part 365 may set a plurality of thresholds having different values in the embodiment 4.

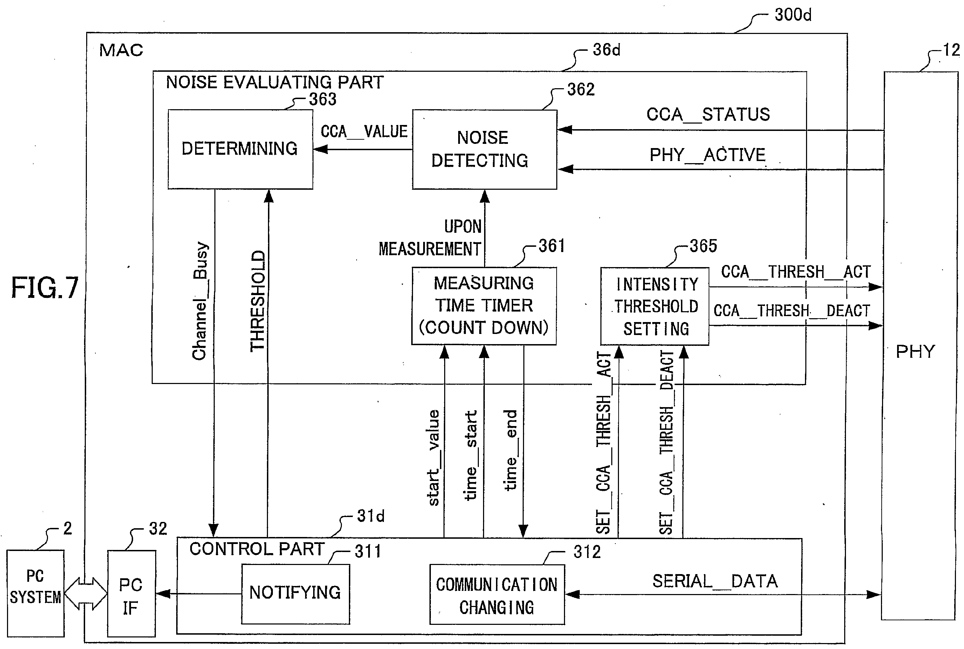

A MAC part 300d of FIG. 7 is different from the MAC part 300c of FIG. 6 described above as the third example, in that a control part 31d sets two different thresholds for activating the CCA_STATUS signal in the PHY part 12 by means of the intensity threshold setting part 365. All the other components have the same functions and carry out the same operations as those of the MAC part 300c of FIG. 6.

Before a start of the noise measurement by means of the noise detecting part 362, the intensity threshold setting part 365 receives, from the control part 31c, a SET_CCA_THRESH_ACT signal indicating a first threshold for the PHY part 12 to activate the CCA_STATUS signal and a SET_CCA_THRESH_DEACT signal indicating a second threshold for the PHY part 12 to deactivate the CCA_STATUS signal, and, outputs these values to the PHY part 12 as a CCA THRESH ACT signal and a CCA_THRESH_DEACT signal, respectively.

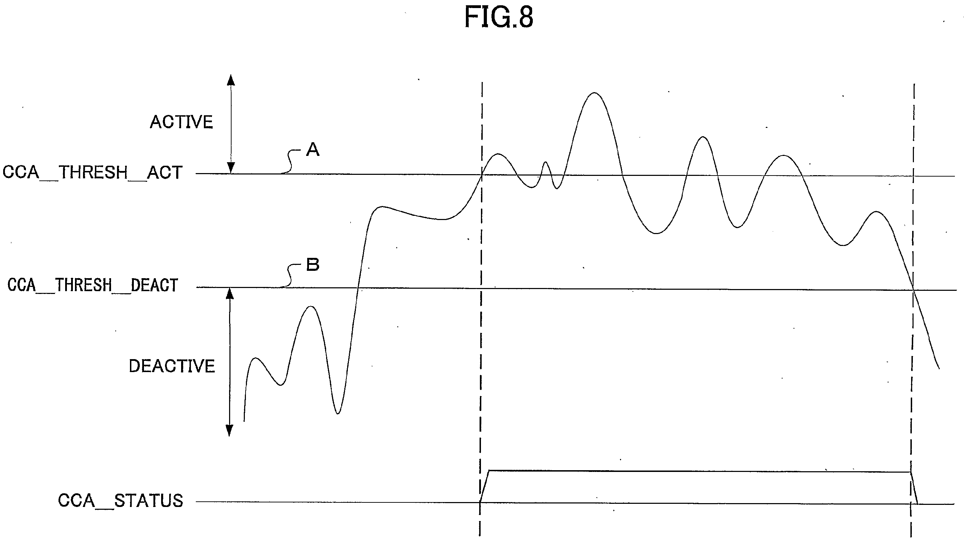

FIG. 8 shows a diagram, as one example, for illustrating state determination for the CCA_STATUS signal by means of the CCA_THRESH_ACT signal and the CCA_THRESH_DEACT signal.

As can be clearly seen from FIG. 8, the PHY part 12 activates the CCA_STATUS signal when the signal level of the frequency band upon communication of the radio medium signal received by the RF part 13 of the radio communication apparatus 1 exceeds the value (level A) set by the CCA_THRESH_ACT signal. Then, after the CCA_STATUS signal is thus activated, the PHY part 12 deactivates the CCA_STATUS signal when the signal level of the frequency band upon communication of the radio medium signal received by the RF part 13 of the radio communication apparatus 1 lowers from the value (level B < level A) set by the CCA_THRESH_DEACT signal. It is noted that, when the signal level of the radio medium signal received by the RF part 13 of the radio communication apparatus 1 changes between the levels A and B after the CCA_STATUS signal is thus activated, the state of the CCA_STATUS signal is not changed. That is, the CCA_STATUS signal after being activated is kept in the active state until the signal level of the radio medium signal received by the RF part 13 of the radio communication apparatus 1 lowers from the level B.

The MAC part 300d in the embodiment 4 can obtain a stable evaluation result even when the signal level of the radio medium signal received by the RF part 13 of the radio communication apparatus 1 changes around the threshold, in comparison to the MAC part 300c of FIG. 6 setting the single threshold for activating the CCA_STATUS signal in the embodiment 3. Thus, from the signal level of the radio medium signal received by the RF part 13 of the radio communication apparatus 1, it is determined whether the CCA_STATUS signal is to be activated or deactivated, by means of a level determining function thus having so-called hysteresis characteristics.

Further, in the embodiment 4, instead of the CCA_THRESH_DEACT signal indicating the lower threshold for deactivating the CCA_STATUS signal, a CCA_THRESH_DELTA signal indicating a change amount from the threshold set by the CCA_THRESH_ACT signal may be used. The CCA_THRESH_DELTA signal and the CCA_THRESH_DEACT signal have the following relationship:

$$\text{(CCA\_THRESH\_DEACT)}$$

$$= \text{(CCA\_THRESH\_ACT)} - \text{(CCA\_THRESH\_DELTA)}$$

There, (CCA_THRESH_DEACT), (CCA_THRESH_ACT) and (CCA_THRESH_DELTA) represent the values indicated by the CCA_THRESH_DEACT signal, the CCA_THRESH_ACT signal and the CCA_THRESH_DELTA signal, respectively.

While the invention herein disclosed has been described by means of specific embodiments and applications thereof, numerous modifications and variations could be made thereto by those skilled in the art without departing from the scope of the invention set forth in the claims.

**Claims**

1. A radio communication apparatus comprising:

noise detecting means (362) for detecting a noise of a frequency band upon communication, configured to output a value indicating a time period in which a signal level received by the radio communication apparatus is equal to or more than a predetermined level during a measuring time;
determining means (363) configured to determine whether or not the value output by the noise detecting means exceeds a predetermined proportion of the measuring time; and
communication changing means (312) for changing the frequency band and/or communication radio field intensity based on a determination result of said determining means.

2. The radio communication apparatus as claimed in claim 1, further comprising:

   a measuring time timer for setting the measuring time for said noise detecting means (362) to detect the noise.

3. The radio communication apparatus as claimed in claim 1 or 2, further comprising:

   intensity determining means (364) for detecting the level of the noise.

4. The radio communication apparatus as claimed in claim 1 or 2, further comprising:

   intensity threshold setting means (365) for setting the predetermined level.

5. The radio communication apparatus as claimed in claim 4, wherein:

   said predetermined level has hysteresis characteristics.


**Patentansprüche**

1. Funkkommunikationsvorrichtung, die Folgendes umfasst:

   Rauschdetektionsmittel (362), um ein Rauschen eines Frequenzbandes bei der Kommunikation zu detektieren, die konfiguriert sind, einen Wert auszugeben, der eine Zeitdauer angibt, in der ein von der Funkkommunikationsvorrichtung empfangener Signalpegel während einer Messzeit gleich oder größer als ein vorgegebener Pegel ist;
   Bestimmungsmittel (363), die konfiguriert sind, zu bestimmen, ob der von den Rauschdetektionsmitteln ausgegebene Wert einen vorgegebenen Anteil der Messzeit überschreitet; und
   Kommunikationsänderungsmittel (312), um das Frequenzband und/oder die Kommunikations-Funkfeldstärke anhand eines Bestimmungsergebnisses der Bestimmungsmittel zu ändern.

2. Funkkommunikationsvorrichtung nach Anspruch 1, die ferner Folgendes umfasst:

   einen Messzeit-Zeitgeber, um die Messzeit für die Rauschdetektionsmittel (362) zum Detektieren des Rauschens einzustellen.

3. Funkkommunikationsvorrichtung nach Anspruch 1 oder 2, die ferner Folgendes umfasst:

   Stärkebestimmungsmittel (364), um den Rauschpegel zu detektieren.

4. Funkkommunikationsvorrichtung nach Anspruch 1 oder 2, die ferner Folgendes umfasst:

   Stärkeschwellenwert-Einstellmittel (365), um den vorgegebenen Pegel einzustellen.

5. Funkkommunikationsvorrichtung nach Anspruch 4, wobei:

   der vorgegebene Pegel Hystereseeigenschaften besitzt.


**Revendications**

1. Appareil de radiocommunication comportant :

   un moyen de détection de bruit (362) pour détecter un bruit d'une bande de fréquence lors d'une communication, configuré pour délivrer une valeur indiquant une période de temps dans lequel un niveau de signal reçu par l'appareil de radiocommunication est égal à ou supérieur à un niveau prédéterminé pendant un temps de mesure ;

un moyen de détermination (363) configuré pour déterminer si oui ou non la valeur délivrée par le moyen de détection de bruit dépasse une proportion prédéterminée du temps de mesure ; et

un moyen de changement de communication (312) pour changer la bande de fréquence et/ou l'intensité de champ de radiocommunication en fonction d'un résultat de détermination du moyen de détermination.

2. Appareil de radiocommunication selon la revendication 1, comportant en outre :

une horloge de temps de mesure pour déterminer le temps de mesure pour ledit moyen de détection de bruit (362) afin de détecter le bruit.

3. Appareil de radiocommunication selon la revendication 1 ou 2, comportant en outre :

un moyen de détermination de fréquence (364) pour détecter le niveau du bruit.

4. Appareil de radiocommunication selon la revendication 1 ou 2, comportant en outre :

un moyen de détermination de seuil d'intensité (365) pour déterminer le niveau prédéterminé.

5. Appareil de radiocommunication selon la revendication 4, dans lequel :

ledit niveau prédéterminé présente des caractéristiques d'hystérésis.

# FIG.1

EP 2 005 776 B1

# FIG.2

FIG.3

300

MAC

- 36 NOISE EVALUATING PART
- 33 TX (TRANSMISSION) BLOCK
- 34 RX (RECEPTION) BLOCK
- 12 PHY
- 31 CONTROL PART
- 35 TRANSMISSION/RECEPTION DATA BUFFER
- 32 PC IF
- 2 PC SYSTEM

FIG.4

EP 2 005 776 B1

# FIG.5

**300b**

MAC

**36b**

NOISE EVALUATING PART

**363**

DETERMINING ← CCA_VALUE — **362** NOISE DETECTING ← CCA_STATUS

← PHY_ACTIVE

Channel_Busy — THRESHOLD

UPON MEASUREMENT

**361** MEASURING TIME TIMER (COUNT DOWN) — UPON MEASUREMENT → **364** INTENSITY DETERMINING PART ← CCA_STRENGTH

start_value — time_start — time_end

CCA_STRENGTH_MAX — CCA_STRENGTH_AVE

**2** PC SYSTEM ⟷ **32** PC IF

**31b** CONTROL PART — **311** NOTIFYING →

**312** COMMUNICATION CHANGING — SERIAL_DATA

**12** PHY

EP 2 005 776 B1

FIG.6

EP 2 005 776 B1

FIG.7

## FIG.8

**EP 2 005 776 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11150756 A
- JP 2003046515 A
- US 20040047324 A1
- EP 1257090 A1